# EUROPEAN PATENT SPECIFICATION

(11) **EP 1 264 148 B1**
(45) Date of publication and mention of the grant of the patent: **17.05.2006**
(21) Application number: 01914248.8
(22) Date of filing: 05.03.2001
(51) Int. Cl.: F24F 11/00

(54) **METHOD AND APPARATUS FOR HEATING AND COOLING OF BUILDINGS**
VERFAHREN UND VORRICHTUNG ZUM HEIZEN UND KÜHLEN VON GEBÄUDEN
PROCEDE ET DISPOSITIF POUR CHAUFFER ET REFROIDIR DES BATIMENTS

(30) Priority: 09.03.2000 NO 20001247
(43) Date of publication of application: 11.12.2002
(73) Proprietor: Gether AS, 3292 Stavern (NO)
(72) Inventor: GETHER, Jörgen, N-3292 Stavern (NO); GETHER, Harald, N-7030 Trondheim (NO)
(74) Representative: Bucks, Teresa Anne
(86) International application number: PCT/NO2001/000087
(87) International publication number: WO 2001/067004

(56) References cited:
- EP-A- 0 676 594
- DE-A- 2 232 069
- DE-A- 19 502 372
- DE-A- 19 809 974
- DE-A- 19 900 358
- GB-A- 2 096 305
- SE-B- 425 576
- US-A- 4 100 763
- "Publication Energisnala hus" VARIS BOKALDERS, 1981, XP002901903

## Description

This invention relates to a method and apparatus for heating and cooling (climate control) of buildings and houses, where a typically 5-15 day thermal storage is integrated with heat-pumps and ventilation to operate in a particularly optimised synergy.

### Background

Large geographical areas in the world has a climate that generally goes through a seasonal change from a warm period In the summer to a cold period in the winter. This seasonal variation is naturally greatly dependent the local topography, whether there is an inland or coastal climate and the actual global latitude in question, but will nevertheless usually be of such an extent that buildings/houses needs means for cooling during the warm season and heating during the cold season in order to keep a comfortable indoor temperature of 20-22°C. For example, in Norway the mean temperatures may vary from -5°C to +20°C over a year, while Mediterranean countries and large parts of USA may typically see mean temperature changes from 0°C in winter to +30°C in summer. Thus, regardless whether one has a cold or warm climate, a substantial amount of energy is needed to keep a comfortable temperature in buildings/houses.

For Norway, which has a relatively cold climate and practically no use of air-conditioning, there is estimated that 71% of the energy consumption in living houses is spent on heating and producing hot water. This figure is somewhat lower for commercial buildings due to a larger demand for electric energy to operate technical machinery. The total energy consumption for heating houses and commercial buildings is estimated to 42.5 TWh/year. Pro capita this amounts to about 10 MWh/year for heating purposes, where approximately 2/3 is hydroelectric power. Despite that there is huge variations in energy consumption patterns in different regions in the world, it is nevertheless obvious from these figures that vast amounts of energy is spent in the world on heating/cooling of houses and buildings, and that there is a huge potential for energy conservation in.this sector.

### Prior art

It is known that heat-pumps are very efficient tools for extracting heat energy from a low-temperature source and deposit the heat in a relatively high-temperature area. In general terms one might say that a heat-pump works like an inverted refrigerator, and can normally deliver 3-4 times more heat than their required energy input for driving the process. That is, while direct healing systems like gas fired heaters, wood firing, electric heating etc. has a theoretical upper limit of 100% efficiency and a practical efficiency well below this limit, conventionally available heat-pumps normally have efficiency rates which is in the order of 300-400%. Thus by using industrially available heat-pumps, the reduction in the energy consumption for heating/cooling of buildings can therefore for be as much as 70-80%.

There are known several types of heat-pumps, which generally can be characterised according to which medium they collect from and deliver the extracted heat to. For buildings and houses the heat will normally be delivered to a medium that is able to distribute the heat in the building, which in practice means water or air that is subsequently circulated in the building. For the heat source of heat-pumps there is a general convention stating that the heat source should have as high a temperature as possible and preferably be relatively stable over the year. This has led to use of heat sources such as a fluid medium circulated in deep drilled holes in bedrock, in buried tubes in the soil, in tubes submerged in fresh water, rivers, sea-water etc.

However, there are a number of problems associated with this approach. Rock and soil have a very low thermal conduction, thus the rock/soil needs a substantial amount of time to replace the heat extracted by the fluid medium. Thus one must employ rather lengthy loops and/or drilled holes in order to obtain a sufficiently large thermal store to allow long term extractions of heat without extensive cooling of the heat source. And as a consequence the investment cost often becomes prohibitive for this type heat extraction. The problem with low extraction capacity of the thermal stores can be solved by using open water as the heat source. It is possible to extract large amounts of heat from water at relatively small volumes (short extraction loops) due to a high specific heat capacity of water and the opportunity to replace extracted heat by convection. Also, water will at moderate depths have a stable and beneficially high temperature of 4°C. Thus water is in many respects an ideal heat source. However, there are problems with corrosion and fouling, especially in sea-water, and this solution is strictly restricted to buildings and houses in the vicinity (within 100 m) of open water. The major part of buildings and houses lies outside this reach.

Another approach to reduce the high investment costs for heat-pumps is to extract heat from open air and transfer this heat to water or air that is distributed inside the buildings/houses. These heat-pumps may be installed directly in the walls of existing houses and give a point deliviry of heat in the form of hot air. Such solutions are very competitively priced, but has a major drawback in that they significantly looses effect when the demand for heat is largest. That is, they loose much of their beneficial heat extraction effect when the open air temperature becomes low (below 0°C). Also, such solutions have encountered severe problems with freezing up of heat exchanger surfaces when the open-air temperature has fallen below +2°C. Thus this solution is generally considered to be only suited for coastal climates where the temperature seldom falls below 0°C.

Another approach for reducing the energy consumption for heating or cooling of buildings is to employ the natural seasonal temperature variations to build up sufficiently large thermal stores which is to be used in the following season to heat or cool the building. An example of such technology is SE 425 576. For instance, the heat resulting from solar radiation can be used advantageously for the heating of buildings and can eliminate the need for energy consuming heating systems. This form of passive solar heat gain is achieved through the architecture of the building by designing the building for optimising the absorption of solar rays over daily and annual cycles. That is, heat is accumulated by allowing the incident solar rays to fall onto a large thermal mass (generally walls or soil in the inside of the building), or is concentrated by various forms of heat collectors, and similarly accumulated. Greater or lesser heating is achieved by varying the amount of shade from the sunlight. The accumulation of heat allows it to be stored and used later when necessary. However, for cold climates the available solar radiation is less than for warmer climates while the need for heat is larger. As a consequence, the thermal stores must be very large in order to contain sufficient heat for a long and cold winter and also require extensive thermal insulation in order to preserve the heat over long periods (several months). Thus this solution is also encumbered with prohibitive costs, and have therefore not found general use.

SE-A-425576 is representative to the features of the preamble of claims 1 and 8.

### Objective of the invention

The objective of this invention is to provide a method and apparatus for heating and cooling of buildings and houses that solves the above given problems.

This objective is met by the features of method steps of the characterising clause of claims 1 or 8.

### Brief description of the invention

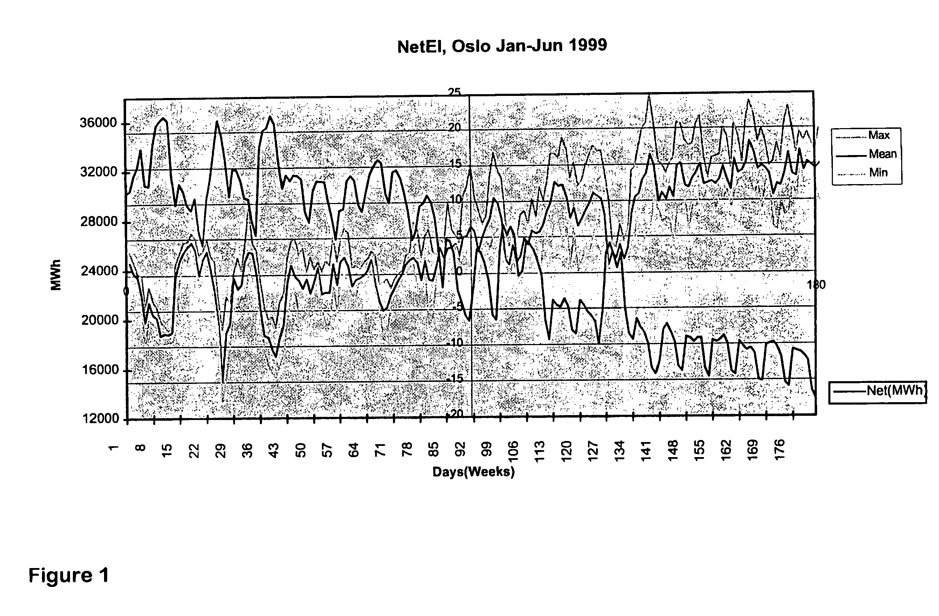

The objectives of this invention can be achieved by exploiting characteristic features of natural temperature variations in the outdoor climate. The outdoor temperature will in many areas go through three typical patterns of natural variation; day/night, passage of weather systems and seasonal changes. An example of such natural variations are illustrated in Figure 1 which gives the mean day air temperature in the first half of 1999 for the city of Oslo, Norway. It is the temperature variations due to passage of weather systems which typically occurs in 1-15 days and the day/night variation that is of interest, since these can be utilised to extract heat to warm buildings in relatively mild/warm periods, or vice versa, to discharge heat to cool buildings in relatively cool/cold periods, and then accumulate this heat/cold in moderately sized thermal stores with moderate thermal insulation.

Thus, in the case of heating buildings/houses in a cold climate, a special beneficial -synergy is obtained by employing a heat-pump which extracts heat from outdoor air during these relatively warm periods and then stores this heat in a moderately sized and isolated thermal store which has capacity of storing 5-15 days heat consumption. Such a system will avoid the disadvantages of conventional air-to-air heat-pumps, since operation of the heat-pump at only relatively warm periods ensures optimal working conditions such that a maximum heat extraction efficiency is achieved. Thus the full potential of the beneficial heat-pump technology is ensured at all climates, and at the same time the risk for production interruptions due to frost formation in the fans is minimised since the warm periods will typically give outdoor air temperatures above 0°C, or at least only a few degrees minus. In the case of cooling of buildings/houses in a warm period the situation becomes reversed. Now it is the relatively cold periods due to passage of weather systems and/or at night that is utilised by using a heat pump to build up a sufficient supply of cold matter in the thermal store which can be applied at a later stage to keep the temperature down in the buildings/houses during periods of warm weather.

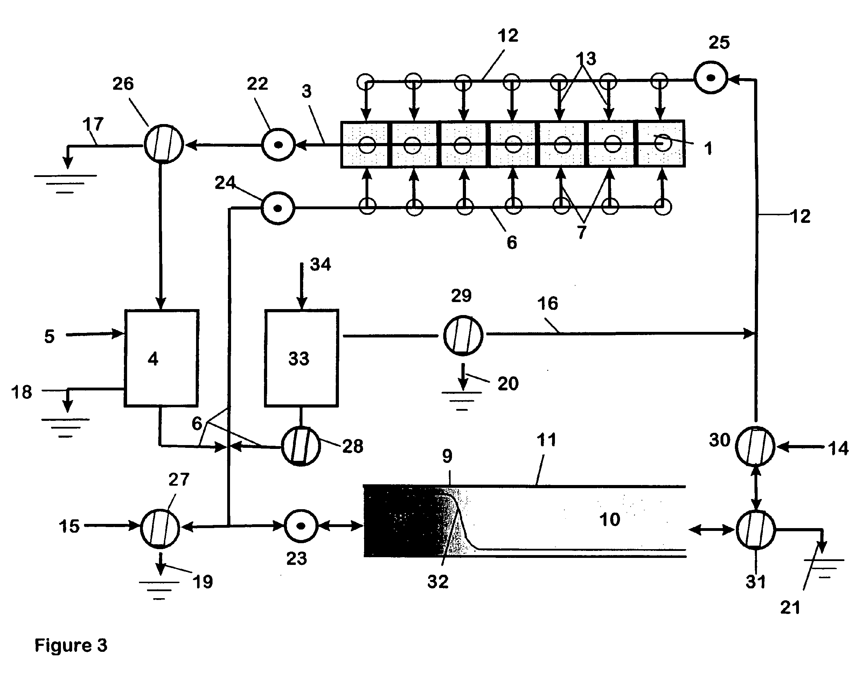

In order to obtain a heat carrying medium for heating/cooling the buildings/houses with an optimum temperature regardless the fill degree of the thermal store, it is preferred that the store is designed as one or several tubes that is filled with coarse particulate matter and that the loading or extraction of heat from the store is performed by sending a heat carrying medium comprising a fluid through the tube(s). In this manner, the thermal store will gain a warm and a cold end since the heat becomes partitioned between the fluid phase and the solid particulate phase according to the working principle of gas-chromatographic columns, That is, as long as a thermal equilibrium between the particulate matter and the heat carrying fluid is substantially obtained within a reasonable time, the transition zone between the cold part and the warm part in each tube(s) will consist of a narrow area with a sharp temperature gradient and where the cold and the warm zone will have a homogeneous (but of course different) temperature (see Fig. 3). Thus, by sending the heat carrying medium through the thermal store in one or the opposite direction, one can readily obtain a warm or cold medium for heating/cooling, respectively. Also, the fill degree of the store can easily be measured by detecting the position of the temperature gradient between the hot and cold zone.

One advantage with this type of thermal store is that it is possible to re-use construction materials as the solid particulate material, thus reducing the amount of waste disposal from the construction industry. However, all types of solid particulate materials can be used as fill material in the tubes as long as the grading of the particles is sufficiently narrow in order to form voids and channels between the solid particles, and thus to allow the fluid of the heat carrying medium to flow through the particulate fill material without an excessive fluid pressure loss. That is, the size distribution must be sufficiently narrow to avoid that smaller particles fill in the voids between larger particles. The thermal store may be situated under an adjoining outdoor area (e.g. a parking area) or may be incorporated within or underneath a building. It may be operated both horizontally and vertically.

Another advantage of the invention is that the heat extraction capacity of the heat-pump may be reduced compared to conventional use of heat-pumps, since there is no longer a need to ensure a heat extraction capacity to cover the heat consumption at the coldest expected weather when the heat-pump also has the lowest heat extraction efficiency. Thus one can employ smaller and cheaper beat-pumps since they are always run at optimised conditions since the extra heat demand at the cold periods are covered by extraction of heat from the thermal store. Another advantage of the invention is that by use of relatively short term climate variations, one can employ relatively small sized thermal stores with moderate insulation means. Especially when compared to systems where the seasonal temperature variations are employed. Thus, the thermal stores according to the invention will be economically very competitive compared to conventional stores.

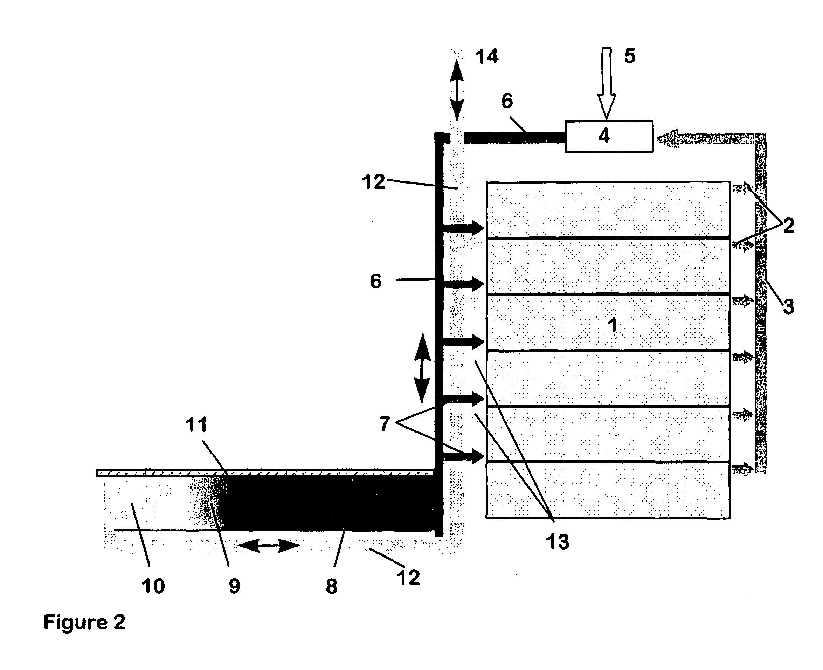

The benefits of the opportunity to employ small scaled heat-pumps and thermal stores can be further enhanced by leading the used air from the houses/buildings to the heat pump for recovery of waste heat. That is, employing the heat-pump as a heat exchanger for reusing the waste heat in addition to the extraction of additional heat from outdoor air. This working principle is illustrated in Figure 2, and will be thoroughly explained under the following detailed description of the invention.

In order to optimise the heat extracting conditions and to ensure that the thermal store has a sufficient supply of hot or cold particulate matter in order to meet the heating or cooling demand in the coming days, it is envisioned that the system incorporates software and regulation devices for making use of weather forecasts for the next 5-7 days to determine if and when the heat-pump should be engaged to fill the thermal store. That is, the regulation system includes sensors that monitor the filling degree of the thermal store, the actual weather conditions (temperature), and the actual drain rate of heat in the building/house, and employs this information together with the weather forecast to decide when the heat pump should be activated and when the heating/cooling demand can be optimally covered by the accumulated hot/cold matter in the thermal store. In this way, the energy consumption for heating/cooling buildings can be further reduced.

Thus in sum, the invention provides a very energy efficient and economically viable method and device for heating of buildings and houses, which in principle is analogous to the energy efficient hybrid engine solution for cars where a small sized combustion engine is constantly run at optimised efficiency for production of electric energy at just above the mean energy need for propulsion of the car, and where the surplus electricity is stored in batteries to be used by the electric propulsion engines at periods with extra load. The method can be applied for any type building or house, such as apartment buildings, commercial buildings, office buildings, store houses etc., and can be adapted to heat/cool one or several separate rooms or areas in one or several houses/buildings. For simplicity, each heating/cooling zone will be called ventilation unit (VU) in the following.

### Detailed description of the invention

The invention will be further explained by way drawings and examples of preferred embodiments.

### Description of the drawings

Figure 1 shows a typical example of how the mean day-time temperature varies over a year in an inland climate (city of Oslo), with simultaneous variation in consumption of electric power.
Figure 2 shows a diagrammatic view of the working principle for a device for heating and/or cooling a building according to the invention.
Figure 3 shows a schematic view of a preferred embodiment of a device for heating and/or cooling a building according to the invention.
Figure 4 is a flow sheet which shows the working principle for an auxiliary software for the logic control of the preferred embodiment shown in Fig. 3. >

The working principle of the invention is schematically presented in Fig. 2, where reference numeral 1 depicts a series of ventilation units, 2 denotes ventilation ducts for suction of used air from each VU, 3 is a duct that leads the used air to a heat-pump 4, 5 is a supply line for outdoor air to the heat-pump 4, 6 is a duct that leads the fresh heated air exiting the heat-pump 4 into the VU's via ducts 7 and/or to the hot end 8 of a thermal store 11. The thermal store also has a cold end 10 and a heat transfer zone 9. 14 is a second outdoor air Intake that is connected via duct 12 to ventilation ducts 13 for supplying cold air to each VU and/or to the cold end 10 of the store 11.

Each VU is supplied with hot air by ducts 7, and cold air by ducts 13, when the device is in heating modus. The hot air is, depending on the weather conditions and the fill degree of the thermal store, supplied by extracting hot air from the hot end 8 into duct 6 as long as the fill degree of the store is satisfactory. In this case cold air is sucked in through inlet 15 and sent to the cold end 10 of the store 11. In the case when the thermal store is less than satisfactory filled in order to meet the expected heat demand the coming period, the heat-pump 4 will be activated and hot air lead to the ventilation ducts 7 by duct 6. Eventual surplus hot air will then be directed into the hot end 9 of the store 11 for accumulation of heat. The cold air exiting the cold end of the thermal store 11 will be discharged through duct 12 and inlet 14.

Generally, an air-to-air heat-pump will take in cold fresh outdoor air and extract some of it's heat content and pass this heat over to a separate air-stream that is employed to heat the VU such that the cold fresh air will be further chilled and discharged. Thus, a heat-pump can shift from raising the temperature to lowering it, and by connecting this discharge outlet for cold air to the cold end of the thermal store (not shown in Fig. 2), the heat-pump can be employed to build up cold matter in the store and/or to cool the ventilation units 1 directly by leading the cold air into the them through duct 12 and 13. Thus the principle solution as presented in Fig. 2 may also be employed to cool the ventilation units. In this case, hot air will be discharged through an outlet on duct 6 (not shown), and used air will be discharged from an outlet on duct 3.

Further the working principle of the invention includes optimised utility of four factors;
1. the energy drain/gain by each ventilation unit and the sum of this for all units
2. the filling degree of the thermal store
3. the weather forecast for the coming 5-7 days
4. the micro-climate (local climate) of individual buildings/houses.

The energy drain/gain is typically a result of outdoor temperature, time of day and day in week, and is the total sum of settings for ventilation and temperature by the individual ventilation units. Weather forecasts provide two types of information; forecast of expected outdoor temperatures and forecast of expected weather type (overcast, windy, solar heating etc.) for the coming days. Micro-climate parameters such as total energy gain/drain, time of day, day in week, time of year, and outdoor temperature are registered and stored for each ventilation unit in order to provide a statistically sufficient basis for employing the weather forecast to estimate the coming days energy drain/gain. This estimate and the filling degree of the thermal store (as measured by the ratio hot/cold zone) are employed to determine when and for how long the heat-pumps should be engaged.

Also, the following factors are incorporated into the operation scheme of the invention; Used ventilation air is normally the cheapest source for heat since it generally has a higher temperature and thus a higher heat content than outdoor air. Used air is therefore the primary heat source while outdoor air is a secondary heat source which covers the additional demand. The heat-pump(s) is/are always employed at optimum (full) load, since there is no need for adjusting the output to the actual drain rate of the VUs as long as the surplus heat can be accumulated into the thermal store. And in the case the thermal store is filled, the heat pump is turned off, and all heat demand will be supplied by the thermal store. Thus one can employ relatively simple heat-pump(s) without capability of regulating the load, and thus gain an economical advantage and optimal operating conditions.

The operation of heat-pump(s) and the auxiliary valves and fans for driving the air-streams in the apparatus, is performed by a regulation system that is under control of a software program that determines the operation modus of the apparatus according to estimates of the expected heat/cooling demand the coming 5-7 days and the actual user settings of fresh air and temperature of each VU. Such software may run on ordinary and available PC-type computers.

### Example 1

A preferred embodiment of the invention that is particularly versatile and suited for climates with large seasonal temperature variations is schematically presented in Figure 3. Here reference numeral 1 denotes a series of ventilation units, 3 is a duct for used air which is equipped with a fan 22 and a two 2-way flow diverter 26 for leading the used air either to a discharge outlet 17 or to a heat-pump 4. Heat-pump 4 is connected to an inlet duct 5 for fresh outdoor air, a discharge outlet 18, and a branch of duct 6 for supplying warm fresh air. The duct 6 runs from the hot end 8 of the thermal store or storage 11 to the inlet ducts 7 of each VU 1, and is equipped with fan 23 and 24. Duct 6 is also connected to fresh air intake 5 which is equipped with a 2-way flow diverter 27 and discharge outlet 19. Another branch of duct 6 is connected to a second heat-pump 33, and is equipped with a 2-way flow diverter 28. The second heat-pump 33 is supplied with fresh outdoor air from inlet 34 and is equipped with a cold fresh air outlet 16 that in the other end is connected to the supply duct for cold fresh air 12. Duct 16 is equipped with a 2-way flow diverter 29 and a discharge outlet 20. Further, supply duct 12 for cold fresh air runs from the cold end 10 of the thermal storage 11 to the inlet ducts 13 of each ventilation unit 1, and it is equipped with fan 25, a 2-way flow diverter 10 with fresh outdoor air inlet 14 and a 2-way flow diverter 31 with outlet discharge 21.

Thus, each ventilation unit is given the opportunity to have both the temperature and ventilation (supply of fresh air) regulated. The units may be flats, offices or suites of offices, or individual rooms in these. Each VU is kept closa to barometric pressure by balancing fresh air input to used-air removal, and the used-air ducting 3 is always under suction. Heat transfer is achieved by ventilation air. Temperature is adjusted at individual outlets by balancing the streams of warm and cool fresh air. The thermal store 11 consist of one or several tubes filled with granulated concrete with average diameters of 20-60 mm. Typical dimensions are 1-1,5 m in diameter and a length of 3-20 m, preferably 5-10 m. The total amount of granulated concrete should be about 0.5 - 2.0 m³ per m² floor area of the ventilation units that is to be heated/cooled, depending on the local climate and degree of insulation of the ventilation units. The temperature of the hot zone in the thermal store should be in the range 30-60°C, preferably 35-50°, and more preferably 40-45°C, while the cold zone should be about 5-20°C, preferably 7.5-15°C, and most preferably 8-12°C. The thermal store is depicted on a horizontal position, but can be oriented in any angle against the horizon. Also, there should preferably be provided means for drainage of condensed water. This is especially important for humid and warm climates where the apparatus is mainly engaged in cooling of the ventilation units. This can be provided by simply giving the tubes a slight inclination relative to the horizontal plane and some kind of drainage duct for discharging the condensed water. The linear flow velocity of the ventilation air during passage through the thermal store tubes is preferably about 1-2 m/s or less in order to ensure a rapid thermal equilibrium and moderate pressure losses. A rapid thermal equilibrium is important for achieving a steep temperature gradient (reference numeral 32 in Fig. 3) and correspondingly short transition zone 9 between the hot 8 and cold zone 10 in the thermal store,

Also, by using two heat-pumps, a possibility exists for boosting the accumulation speed for filling the thermal store if only a short period of suitable outdoor temperatures is forecast. This feature enhances the overall energy reduction of the invention, since the probability of being forced to run the heat-pumps at less than optimal outdoor temperatures is reduced.

As mentioned, the operation of the preferred embodiment is performed in a set of different modes by selected turning on/off of fans and heat-pumps, and positioning of 2-way diverters/valves. It is preferred that the modes of operation are:

### I. Neutral

In this case, there is sufficient heat production from other sources in the building. Outdoor air at 14 passes through fan 25 to VUs 1, and is discarded via used air fan 22 and diverter 26.

### II. Heating

IIa: Normal heating mode, warm air supplied to or from the thermal store depending on outdoor temperature. Like mode I, but diverter 26 shifted to pass used air through heat-pump 4, where fresh air is taken through 5, heated and moved by fan 24 to VUs 1. Depending on outdoor temperature heat-pump 4 may deliver more or less air than required by VUs 1.
IIb: If surplus heat produced by heat-pump 4, AND thermal core full OR mild/warm weather forecast, then heat-pump 4 is turned off, outdoor air admitted at 14, diverted through thermal store by diverters 30 and 31, and transferred as warm fresh air by fan 24 to VUs 1.
IIc: If surplus heat produced by heat-pump 4, AND thermal store NOT full, AND cool/colder weather expected, remainder from heat-pump 4 is transferred to thermal store through 2-way fan 23, and diverted to exit at diverter 31. The system may switch between IIb and IIc for minimising load on heat-pump 4.
IId: If mild/warm now, AND cold weather expected, AND thermal store NOT full, then heat-pump 33 is started, taking outdoor air at full capacity and charging thermal store at 2-3 times ordinary flow rate through 2-way fan 23 with exit of cold air at 31. At the same time, fan 24 delivers warm air to VUs as demanded.

### III. Cooling

IIIa: If warm weather, then warm air enters through 15 and diverter 27 through fan 24 as warm, fresh air to VUs 1. Warm air through 15 and 27 passes through the thermal store 11, is cooled, and goes via diverters 31 and 30, and fan 25 as cool, fresh air to VUs 1.
IIIb: If cool/cold weather, then cool fresh air enters at 14, passes through diverters 30 and 31 to charge the thermal store, and exit as warm fresh air through 2-way fan 23 and exit via diverter 27. Some of this air is led through fan 24 to VUs 1 as fresh, warm air, depending on demand from the VUs.
IIIc: If lasting warm weather, with the thermal store in danger of being exhausted, then heat-pump 33 is turned on and warm fresh air enters through 34 to be cooled in heat-pump 33, and then passed through diverter 29 both to fan 25 and to VUs 1 for cooling, and through diverters 30 and 31 to the thermal store 11 for charging, and exits as warm air through 2-way fan 23 and diverter 27.

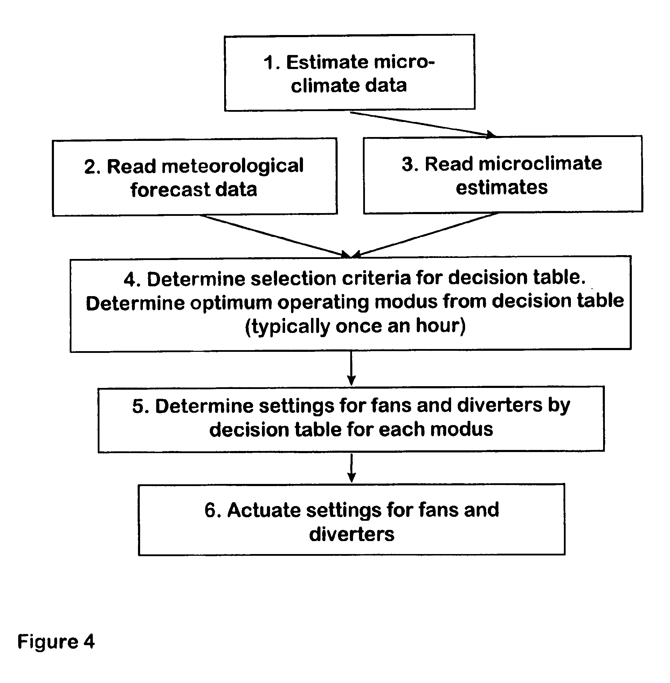

It is preferred that the software that selects which operation modus that is to be employed consists of six individual modules which co-operate as shown in Figure 4. Module one is separate and should be given as an input from the operator of each apparatus, but should preferably be supplied by firms that offer this service as a speciality in order to ensure a sufficiently high hit percent in the predictions. The remaining modules should preferably be run on a local PC or CPU that is connected to the regulation device that controls and regulates the settings of fans, heat-pumps and diverters. The run frequency should be of the order of once per hour, and will typically run for 5-10 seconds each time.

In order to make the controlling software compact and fast such that it may be placed in a separate small computing unit that is integrated as a part of the apparatus, it is preferred that the individual modules are made quite simple with the main task determining selection criteria for searching in a first decision table to determine mode of operation (module 4), and settings of diverters and fans (module 5). Also the last module (module 6) should be simple, using standard cards to turn data from the program into actuating voltage for switches. In detail, module 4 determines a set of selection criteria by matching forecast data to demand for heating or cooling, and for whether the thermal core should deliver or store energy. Each criterion sets or clears a corresponding bit in a computer integer word (typically 32 bit length). This word in turn acts as a search profile.

The central concept of the software is the decision table, of which an example is shown in Table 1. The table makes it possible to determine in a very fast and easy way what operating mode should be selected for optimal saving of energy under a large set of weather conditions bye use of bits that are set or cleared in appropriate positions. With 30 individual criteria as in the table, some 1 billion alternatives may be specified. In practice some 30-200 is sufficient, depending on local climate peculiarities. Table 1 illustrates a few examples of individual specification for mode IIa, and overlapping modes I and IIIa (e.g. all weekdays are treated the same).

The alternatives (corresponding to columns in Table 4) are subsequently treated as integer numbers, and sorted in numerical order in a table with associated operating mode. The proper operating condition is then found by a binary search in this table with the calculated search profile. By ordering the individual selection criteria suitably, similar operating conditions will have similar numeric values, and the search will find the nearest optimal match if the actual value is not in the decision table. As shown in Table 1, the ordering instead groups similar criteria together, for pedagogical purposes. Actual grouping in practice, as well as specific alternatives, may vary according to local climatic conditions, and can easily be developed by a skilled person.

### Example 2

This example gives an example of a preferred embodiment of the invention that is suitable for cold climates and in some coastal climates where the need for active cooling is unlikely to occur. This embodiment is exactly similar to the embodiment of example 1, except that heat-pump 33, the right branch of duct 6 with 2-way flow diverter 28, and duct 16 with 2-way flow diverter 29 and discharge outlet 20 is omitted.

### Example 3

This example gives an example of a preferred embodiment of the invention that is suitable for warm climates where the need for active heating is unlikely to occur. This embodiment is exactly similar to the embodiment of example 1, except that heat-pump 4 with the left branch of duct 6 with 2-way flow diverter 26, fresh air inlet 5, and discharge outlet 20 is omitted.

Even though the invention has been described by way of examples of preferred embodiments that employs air as the heat carrying and distributing medium, it should be clear that the invention also relates to the general principle of heating/cooling of buildings by utilising natural short term variations in the climate in a combination of heat-pumps and a thermal store. Thus, there might be envisioned many alternative embodiments that is obvious for a skilled person and that falls within the scope of this invention, including other forms and types of thermal stores such as construction parts of the buildings thernselves, water-pools, other heat carrying and distributing media such as water, etc.

**Table 1 Example of decision table for specifying modes of operation**

| **Mode** | **Heating** | | | **Neutral** | **Cooling** | | |
|---|---|---|---|---|---|---|---|
| Condition | IIa | IIb | ... | I | ... | IIIa | ... |
| Now >5°C below BT | 1 | 0 | ... | 0 | ... | 0 | ... |
| Now 0-5°C below BT | 0 | 1 | ... | 1 | ... | 0 | ... |
| Now 0-5°C above BT | 0 | 0 | ... | 1 | ... | 0 | ... |
| Now >5°C above BT | 0 | 0 | ... | 0 | ... | 0 | ... |
| >5°C below BT in daytime | 0 | 0 | ... | 0 | ... | 0 | ... |
| 0-5°C below BT In daytime | 1 | 1 | ... | 1 | ... | 0 | ... |
| 0-5°C above BT in daytime | 0 | 0 | ... | 1 | ... | 0 | ... |
| >5°C above BT in daytime | 0 | 0 | ... | 0 | ... | 0 | ... |
| >5°C below BT at night | 0 | 0 | ... | 0 | ... | 0 | ... |
| 0-5°C below BT at night | 1 | 1 | ... | 0 | ... | 0 | ... |
| 0-5°C above BT at night | 0 | 0 | ... | 1 | ... | 0 | ... |
| >5°C above BT at night | 0 | 0 | ... | 0 | ... | 0 | ... |
| >5°C below BT in 3 days | 0 | 0 | ... | 0 | ... | 0 | ... |
| 0-5°C below BT in 3 days | 1 | 1 | ... | 1 | ... | 0 | ... |
| 0-5°C above BT in 3 days | 0 | 0 | ... | 1 | ... | 0 | ... |
| >5°C above BT in 3 days | 0 | 0 | ... | 0 | ... | 0 | ... |
| Store empty of heat | 0 | 0 | ... | 0 | ... | 0 | ... |
| Store 0-20% of heat | 0 | 0 | ... | 0 | ... | 0 | ... |
| Store 20-40% of beat | 0 | 0 | ... | 1 | ... | 0 | ... |
| Store 40-60% of heat | 0 | 0 | ... | 1 | ... | 0 | ... |
| Store 60-80% of heat | 1 | 1 | ... | 1 | ... | 0 | ... |
| Store 80-100% of heat | 0 | 0 | ... | 0 | ... | 0 | ... |
| Store full of heat | 0 | 0 | ... | 0 | ... | 0 | ... |
| Monday | 1 | 1 | ... | 1 | ... | 1 | ... |
| Tuesday | 0 | 0 | ... | 1 | ... | 1 | ... |
| Wednesday | 0 | 0 | ... | 1 | ... | 1 | ... |
| Thursday | 0 | 0 | ... | 1 | ... | 1 | ... |
| Friday | 0 | 0 | ... | 1 | ... | 1 | ... |
| Saturday | 0 | 0 | ... | 0 | ... | 0 | ... |
| Sunday | 0 | 0 | ... | 0 | ... | 0 | ... |

## Claims

1. Method for energy efficient regulation of temperature and ventilation for one or more ventilation unit(s) (1) of building(s), where one or more heat-pump(s) (4,33) is(are) used to exchange thermal energy between outdoor air and an indoor heat carrying fluid medium, where the heating and/or cooling of each ventilation unit(s) (1) is(are) achieved by distributing the indoor heat carrying fluid medium in each ventilation unit(s) (1),
**characterised in**
- **that** the natural short term variations in outdoor temperature due to expected passages of weather systems based on weather forecasts and the day/night variations is utilised to give the one or more heat-pump(s) (4,33) optimised conditions such that the one or more heat-pump(s) (4,33) is(are) only turned on for extracting outdoor heat which is delivered to the indoor heat carrying and distributing fluid medium at the relative mild/warm periods in the case of warming the building(s), or only in the relative cool/cold periods for cooling the heat carrying and distributing fluid medium for removal of indoor heat in the case of cooling the building(s), and
- **that** the thermal energy that is exchanged with the outdoor air, based on the microclimate of the building(s), the energy drain/gain by each ventilation unit (1) and the sum of this for all units (1), and the filling degree of a thermal storage (11), is partly used to cover the ventilation unit(s) (1) actual demand for heating or cooling and the remaining part of the thermal energy is sent to a thermal store to cover the ventilation unit(s) (1) heating or cooling demand during the subsequent period(s) where the natural weather conditions is less favourable for exchanging thermal energy from outdoor air by use of heat-pump(s) (4,33).

2. Method according to claim 1,
**characterised in that** the heating demand is also covered by extracting heat from used air exiting the one or more ventilation unit(s) (1).

3. Method according to claim 1 or 2,
**characterised in that** the weather forecast for the following 5-7 days is employed to estimate the coming heating or cooling demand of the ventilation unit(s) (1), and that this estimate is employed together with the actual degree of filling of the thermal store (11) to determine when and for how long the heat-pump(s) (4,33) should be engaged in order to build up an optimal thermal storage for the coming 5-7 days.

4. Method according to claims 1-3,
**characterised in that** the actual micro-climate, as measured by heat drain or gain of each ventilation unit(s) (1), outdoor temperature, user settings, time of day, day of week, and season, is stored to build up a data-base which is to be used for estimating the coming 5-7 days of heating or cooling demand of the ventilation unit(s) (1).

5. Method according to any of claim 1-4,
**characterised in that** fresh air is employed as the heat carrying and distributing fluid medium for heating or cooling the ventilation unit(s) (1) of the building(s), and that the ventilation and heat regulation of each ventilation unit(s) (1) is(are) achieved by suction of used air which is replaced by balanced amounts of cold and/or hot fresh air to give the wanted temperature of the fresh replacement air.

6. Method according to any of claim 1-5,
**characterised in that** in order to obtain a stable and equal temperature of the heat carrying and distributing medium regardless of the fill degree of the thermal store (11), that
- the thermal store (11) comprises one or more elongated tube(s) that is/are filled with coarse particulate solid material with a narrow size distribution, or particular design, and,
- that the heat exchange is performed by sending the heat carrying and distributing fluid medium through the particulate solid matter in one or the other direction such that there is formed a cold (10) and a hot (8) zone in opposite ends of the tube that has a substantially homogeneous cold and hot temperature, respectively.

7. Method according to claim 6,
**characterised in that** the filling degree of the thermal store (11) is determined by measuring the position of the temperature transition zone between the cold (10) and hot (8) zone of the thermal store (11).

8. Apparatus for energy efficient regulation of temperature and ventilation of one or more ventilation unit(s) (1) of building(s),
**characterised in that** the apparatus comprises
- means (2, 3, 22) for extracting used air from each of the ventilation unit(s) (1),
- means for replacing the extracted used air with balanced amounts of hot (6, 7, 24) and cold (12, 13, 25) fresh air for each of the ventilation unit(s) (1),
- a thermal store (11) that has a hot (8) and cold (10) zone that are in communication with the means for supplying hot and cold fresh air, respectively,
- one or more heat-pump(s) (4,33) which has means (5,18) and (16, 29, 34) for exchanging thermal energy with outdoor air, and means for transferring this exchanged thermal energy to a supply of fresh outdoor air which is in communication with the means for supplying hot and cold fresh air and the hot (8) and cold (10) zone of the thermal store (11),
- means (26, 31) for regulating the air flows to and from the ventilation unit(s) (1) and the thermal store, and means for turning the one or more heat-pump(s) (4,33) on or off,
- means for measuring the fill degree of the thermal store (11),
- means for measuring the energy drain/gain of each ventilation unit (1), and
- means for regulating the operation of the heat pump(s) (4, 33), the means for mixing the cold and hot fresh air and air flow through each ventilation unit (1), and the thermal storage (11), based on the expected variations in outdoor temperature based on weather forecast, the fill degree of the thermal storage (11), micro-climate of the building(s), and the energy drain of each ventilation unit, (1) and the sum of this for all units (11).

9. Apparatus according to claim 8,
**characterised in that** the apparatus comprises means for registering and storing the actual micro-climate, as measured by heat drain or gain of each ventilation unit(s), outdoor temperature, user settings, time of day, day of week, and season, and means for employing this data to estimate the coming 5-7 days of heating or cooling demand of the ventilation unit(s) (11).

10. Apparatus according to claims 8 or 9,
**characterised in that** the thermal store (11) comprises one or more elongated tube(s) that is/are filled with coarse particulate solid material with a narrow size distribution, and where the heat exchange is performed by sending the heat carrying fresh air through the particulate solid matter in one or the other direction such that there is formed a cold and a hot zone in opposite ends of the tube that has a substantially homogeneous cold and hot temperature, respectively.

11. Apparatus according to claim 10,
**characterised in that** the one or more elongated tubes of the thermal store (11) has a diameter of about 1-1.5 m and a length of 3-20 m, preferably 5-10 m.

12. Apparatus according to claim 11,
**characterised in that** the diameters of the coarse particulate material of the thermal store is in the range of 20-60 mm.

13. Apparatus according to claims 12,
**characterised in that** the coarse particulate material of the thermal store (11) is crushed concrete in a total amount of 0.5-2.0 m³ per m² of ventilation unit floor area that is to be served.

14. Apparatus according to claim 13,
**characterised in that** the temperature of the thermal store's (11) cold zone is kept in the range of 5-20°C, preferably 7.5-15° and most preferably 8-12°C, and that the thermal store's hot zone is kept in the range of 30-60°C, preferably 35-50° and most preferably 40-45°C.

15. Apparatus according to any one of claims 8 to 14 further comprising
- means (14, 30) and (15, 27) for supplying fresh outdoor air directly into the ventilation units (1) that are in communication with the means for supplying cold (12, 13, 25) and hot (6, 7, 24) fresh air to the ventilation units (1), respectively,
- means for discharging air (17, 18, 19, 20, 21),
- means (26, 27, 28, 29, 30, 31) for regulating the air flow to and from the inlets for fresh air (14, 15), outlets for discharging air (17, 18, 19, 20, 21), the ventilation units (1), the thermal store (11), and the heat-pumps (4, 33),
- means for employing the weather forecast for the coming days to determine the most favourable periods for extracting thermal energy from outdoor air by the heat-pump(s),
- means for predicting the expected energy drain/gain from each ventilation unit according to the weather forecast and the historical average consumption rates based on registered data for the heat drain/gain of each ventilation unit with the actual outdoor temperature, user settings, time of day, day of week, and season, and
- means for regulating the apparatus according to the predicted heating/cooling demand and favourable periods for running the heat-pumps (4, 33).

16. Apparatus according to claim 15,
**characterised in that** the means for regulating the apparatus according to the predicted heating/cooling demand and favourable periods for running the heat-pumps operates in three modes, where mode I is a neutral run condition where the heating demand can be covered without the use of heat-pump(s), mode II is the heating mode, and mode III is the cooling mode,
where mode I comprises;
- passing outdoor air from said means air supply (14) through a fan (25) to the ventilation units (1), and then discharging the used ventilation air through air discharge means (17) by a fan (22) and diverter (26),
where mode II comprises;
- a normal heating mode where warm air supplied to or from the thermal store (11) depending on outdoor temperature by using the same settings as mode I except that the diverter (26) is shifted to pass used air through a heat-pump (4),
where fresh air is taken through thermal energy exchange means (5), heated and moved by a fan (24) to the ventilation units (1),
- a first surplus heating mode where the heat-pump (4) produces more heat than is consumed by the ventilation units (1) while the thermal store (11) is full or while mild/warm weather is expected, then the heat-pump (4) is turned off, outdoor air admitted at air supply means (14), diverted through to thermal store (11) by diverters (30 and 31), and transferred as warm fresh air by a fan (24) to the ventilation units (1),
- a second surplus heating mode where the heat-pump (4) produces more heat than is consumed by the ventilation units (1) when the thermal store (11) is not full in the case when cool/colder weather is expected, then remainder from the heat-pump (4) is transferred to the thermal store (11) through a 2-way fan (23), and diverted to exit at an air outlet (21) via a diverter (31),
- a third surplus heating mode where the weather is presently mild/warm but cold weather is expected while the thermal store (11) is not full, then a heat-pump (33) is started, taking outdoor air through a heat exchange means (34) at full capacity and charging the thermal store (11) at 2-3 times ordinary flow rate through said 2-way fan (23) with exit of cold air at an air discharge means (21) via an air flow regularity means (31), while a fan (24) simultaneously delivers warm air to ventilation units (1) as demanded, and
where mode III comprises;
- a normal cooling mode in the case of presently warm weather, then warm air enters through air supply means (15) and a diverter (27) through a fan (24) as warm, fresh air to ventilation units (1), such that warm air passes through the thermal store (11) and becomes cooled, and goes via diverters (31, 30) and a fan (25) as cool fresh air to the ventilation units (1),
- a second cooling mode in the case of presently cool/cold weather, then cool fresh air enters at air supply means (14), passes through diverters (30, 31) to charge the thermal store (11), and exit as warm fresh air through said 2-way fan (23) and exits via a diverter (27), and some of this air is led through fan (24) to ventilation units (1) as fresh, warm air, depending on demand from the ventilation units (1),
- a third cooling mode when presently and expected lasting warm weather, and with the thermal store in danger of being exhausted, then a heat-pump (33) is turned on and warm fresh air enters through thermal energy exchange means (34) to be cooled in said heat-pump (33), then passing through a diverter (29) both to a fan (25) and to ventilation units (1) for cooling, and through diverters (30, 31) to the thermal store (11) for charging, and exits as warm air through said 2-way fan (23) and a diverter (27).

17. Apparatus according to claims 15-16,
**characterised in that** the apparatus comprises the same means as the apparatus specified in claim 15 except the heat-pump (4), fresh air inlet (5), left branch of duct (6) and discharge outlet (18).

18. Apparatus according to claims 15-16,
**characterised in that** the apparatus comprises the same means as the apparatus specified in claim 15 except heat-pump (33), fresh air inlet (34), right branch of duct (6), 2-way flow diverter (28, 29), duct (16), and discharge outlet (20).

## Patentansprüche

1. Verfahren zur energiesparenden Temperatur- und Klimaregelung für eine oder mehrere Gebäudebelüftungseinheit(en) (1), wobei eine oder mehrere Wärmepumpe(n) (4, 33) verwendet wird (werden), um Wärmeenergie zwischen der Außenluft und einem gebäudeinternen wärmetransportierenden Strömungsmedium auszutauschen, wobei die Erwärmung und/oder Abkühlung jeder Belüftungseinheit (1) durch Verteilen des gebäudeinternen wärmetransportierenden Strömungsmediums auf jede Belüftungseinheit (1) erzielt wird,
**dadurch gekennzeichnet,**
- **dass** die natürlichen kurzzeitigen Veränderungen der Außentemperatur aufgrund zu erwartender durchziehender Wetterlagen basierend auf Wettervorhersagen und Tag-/Nachtschwankungen verwendet werden, um der einen oder den mehreren Wärmepump(e)n (4, 33) optimierte Bedingungen zur Verfügung zu stellen, so dass die eine oder die mehreren Wärmepumpe(n) (4, 33) nur eingeschaltet wird (werden), um im Fall des Erwärmens des Gebäudes bzw. der Gebäude bei relativ milden/warmen Perioden Außenwärme zu entziehen, die dem gebäudeinternen wärmetransportierenden und -verteilenden Strömungsmedium zugeführt wird, oder nur im Falle des Abkühlens des Gebäudes bzw. der Gebäude bei relativ kühlen/kalten Perioden, um das wärmetransportierende und -verteilende Strömungsmedium abzukühlen, um die Innenwärme auszuleiten, und
- **dass** die Wärmeenergie, die mit der Außenluft ausgetauscht wird, auf Grundlage des Mikroklimas des Gebäudes bzw. der Gebäude, des Energieabzugs/Energiegewinns jeder Belüftungseinheit (1) und der Summe davon für alle Einheiten (1), und des Füllgrads eines Wärmespeichers (11) teilweise dazu verwendet wird, den tatsächlichen Bedarf der Belüftungseinheit(en) (1) zum Erwärmen oder Abkühlen zu decken, und der übrige Teil der Wärmeenergie zu einem Wärmespeicher geleitet wird, um den Wärme- oder Kühlbedarf der Belüftungseinheit(en) (1) während der anschließenden Periode(n) zu decken, wenn die natürlichen Wetterbedingungen weniger günstig zum Austausch von Wärmeenergie aus Außenluft durch den Einsatz der Wärmepumpe(n) (4, 33) ist.

2. Verfahren nach Anspruch 1,
**dadurch gekennzeichnet, dass** der Wärmebedarf auch **dadurch** gedeckt wird, dass Wärme aus der Altluft entzogen wird, die aus der einen oder den mehreren Belüftungseinheit(en) (1) austritt.

3. Verfahren nach Anspruch 1 oder 2,
**dadurch gekennzeichnet, dass** die Wettervorhersage für die kommenden 5 - 7 Tage verwendet wird, um den bevorstehenden Wärme- oder Kühlbedarf der Belüftungseinheit(en) (1) zu schätzen, und dass dieser Schätzwert zusammen mit dem tatsächlichen Füllgrad des Wärmespeichers (11) verwendet wird, um zu bestimmen, wann und für wie lange die Wärmepumpe(n) (4, 33) in Anspruch genommen werden sollte(n), um einen optimalen Wärmespeicher für die kommenden 5 - 7 Tage aufzubauen.

4. Verfahren nach den Ansprüchen 1 bis 3,
**dadurch gekennzeichnet, dass** das tatsächliche Mikroklima, wie es durch den Wärmeabzug oder -gewinn jeder Belüftungseinheit (1) ermittelt wird, die Außentemperatur, Benutzereinstellungen, Tageszeit, der Wochentag und die Jahreszeit gespeichert werden, um eine Datenbank aufzubauen, die dazu verwendet werden soll, den Wärme- oder Kühlbedarf der Belüftungseinheit(en) der kommenden 5 - 7 Tage zu schätzen.

5. Verfahren nach einem der Ansprüche 1 bis 4,
**dadurch gekennzeichnet, dass** Frischluft als wärmetransportierendes und -verteilendes Strömungsmedium verwendet wird, um die Belüftungseinheit(en) (1) des Gebäudes bzw. der Gebäude zu erwärmen oder abzukühlen, und dass die Belüftungs- und Wärmeregelung jeder Belüftungseinheit (1) durch Absaugen von Altluft erzielt wird, die durch abgeglichene Mengen von kalter und/oder warmer Frischluft ausgetauscht wird, um der Austauschfrischluft die gewollte Temperatur zu verleihen.

6. Verfahren nach einem der Ansprüche 1 bis 5,
**dadurch gekennzeichnet, dass**, damit eine stabile und gleichmäßige Temperatur des wärmetransportierenden und -verteilenden Mediums ungeachtet des Füllgrads des Wärmespeichers (11) erreicht wird,
- der Wärmespeicher (11) ein langgestrecktes Rohr oder mehrere langgestreckte Rohre umfasst, das/die mit einem groben Partikelfeststoff mit einer engen Größenverteilung oder einer besonderen Auslegung gefüllt ist/sind, und
- der Wärmeaustausch **dadurch** erfolgt, dass das wärmetransportierende und -verteilende Strömungsmedium so in der einen oder anderen Richtung durch den Partikelfeststoff geleitet wird, dass eine kalte (10) und eine warme (8) Zone an entgegengesetzten Enden des Rohrs entsteht, das eine im Wesentlichen einheitliche kalte bzw. warme Temperatur aufweist.

7. Verfahren nach Anspruch 6,
**dadurch gekennzeichnet, dass** der Füllgrad des Wärmespeichers (11) **dadurch** bestimmt wird, dass die Stelle der Temperaturübergangszone zwischen der kalten (10) und der warmen (8) Zone des Wärmespeichers (11) messtechnisch ermittelt wird.

8. Vorrichtung zur energiesparenden Temperatur- und Belüftungsregelung für eine oder mehrere Gebäudebelüftungseinheit(en) (1),
**dadurch gekennzeichnet, dass** die Vorrichtung umfasst:
- Einrichtungen (2, 3, 22), um Altluft aus der (den) Belüftungseinheit(en) (1) abzuziehen,
- Einrichtungen, um die abgezogene Altluft durch abgeglichene Mengen warmer (6, 7, 24) und kalter (12, 13, 25) Frischluft für jede der Belüftungseinheiten (1) auszutauschen,
- einen Wärmespeicher (11), der eine warme (8) und eine kalte (10) Zone aufweist, die mit den Einrichtungen zur Zufuhr warmer bzw. kalter Frischluft in Verbindung stehen,
- eine oder mehrere Wärmepumpe(n) (4, 33) die Einrichtungen (5, 18) und (16, 29, 34) aufweist bzw. aufweisen, um Wärmeenergie mit der Außenluft auszutauschen, und Einrichtungen, um diese ausgetauschte Wärmeenergie zu einer Versorgung frischer Außenluft zu übertragen, die mit den Einrichtungen zur Zufuhr warmer und kalter Frischluft und der warmen (8) und kalten (10) Zone des Wärmespeichers (11) in Verbindung stehen,
- Einrichtungen (26, 31), um die Luftströme zu und aus der (den) Belüftungseinheit(en) (1) und dem Wärmespeicher zu regeln, und Einrichtungen, um die eine oder mehreren Wärmepumpe(n) (4, 33) ein- oder auszuschalten,
- Einrichtungen zum messtechnischen Ermitteln des Füllgrads des Wärmespeichers (11),
- Einrichtungen zum messtechnischen Ermitteln des Energieabzugs/Energiegewinns jeder Belüftungseinheit (1), und
- Einrichtungen zum Regeln des Betriebs der Wärmepumpe(n) (4, 33), Einrichtungen zum Mischen der kalten und warmen Frischluft und des Luftstroms durch jede Belüftungseinheit (1) und den Wärmespeicher (11), auf Grundlage der zu erwartenden Veränderungen der Außentemperatur auf Grundlage der Wettervorhersage, des Füllgrads des Wärmespeichers (11), des Mikroklimas des Gebäudes bzw. der Gebäude, und des Energieabzugs jeder Belüftungseinheit (1) und der Summe davon für alle Einheiten (11).

9. Vorrichtung nach Anspruch 8,
**dadurch gekennzeichnet, dass** die Vorrichtungen Einrichtungen zum Aufzeichnen und Speichern des tatsächlichen Mikroklimas, wie es durch den Wärmeabzug oder -gewinn jeder Belüftungseinheit gemessen wird, der Außentemperatur, Benutzereinstellungen, Tageszeit, des Wochentags und der Jahreszeit umfasst, und Einrichtungen, um diese Daten dazu zu verwenden, den Wärme- oder Kühlbedarf der Belüftungseinheit(en) (1) der kommenden 5 - 7 Tage zu schätzen.

10. Vorrichtung nach Anspruch 8 oder 9,
**dadurch gekennzeichnet, dass** der Wärmespeicher (11) ein langgestrecktes Rohr oder mehrere langgestreckte Rohre umfasst, das/die mit einem groben Partikelfeststoff mit einer engen Größenverteilung gefüllt ist/sind, und wobei der Wärmeaustausch **dadurch** erfolgt, dass die wärmetransportierende Frischluft so in der einen oder anderen Richtung durch den Partikelfeststoff geleitet wird, dass eine kalte und eine warme Zone an entgegengesetzten Enden des Rohrs entsteht, das eine im Wesentlichen einheitliche kalte bzw. warme Temperatur aufweist.

11. Vorrichtung nach Anspruch 10,
**dadurch gekennzeichnet, dass** das eine langgestreckte Rohr oder die mehreren langgestreckten Rohre des Wärmespeichers (11) einen Durchmesser von ca. 1 - 1,5 m und eine Länge von 3 - 20 m, vorzugsweise 5 - 10 m hat/haben.

12. Vorrichtung nach Anspruch 11,
**dadurch gekennzeichnet, dass** die Durchmesser des groben Partikelfeststoffs des Wärmespeichers im Bereich von 20 bis 60 mm liegen.

13. Vorrichtung nach Anspruch 12,
**dadurch gekennzeichnet, dass** es sich bei dem groben Partikelfeststoff des Wärmespeichers (11) um zerstoßenen Beton in einer Gesamtmenge von 0,5 bis 2,0 m³ pro m² zu versorgender Bodenfläche handelt.

14. Vorrichtung nach Anspruch 13,
**dadurch gekennzeichnet, dass** die Temperatur der kalten Zone des Wärmespeichers (11) im Bereich von 5 - 20°C, vorzugsweise 7,5 - 15°C und am bevorzugtesten 8 - 12°C gehalten wird, und dass die warme Zone des Wärmespeichers im Bereich von 30 - 60°C, vorzugsweise 35 - 50°C und am bevorzugtesten 40 - 45°C gehalten wird.

15. Vorrichtung nach einem der Ansprüche 8 bis 14, darüber hinaus umfassend:
- Einrichtungen (14, 30) und (15,27), um frische Außenluft direkt in die Belüftungseinheiten (1) zuzuführen, die mit den Einrichtungen zur Zufuhr kalter (12, 13, 25) bzw. warmer (6, 7, 24) Frischluft zu den Belüftungseinheiten (1) in Verbindung stehen,
- Einrichtungen zum Ausleiten von Luft (17, 18, 19, 20, 21),
- Einrichtungen (26, 27, 28, 29, 30, 31) zum Regeln des Luftstroms zu und aus den Einlässen für Frischluft (14, 15), den Auslässen zum Ausleiten von Luft (17, 18, 19, 20, 21), den Belüftungseinheiten (1), dem Wärmespeicher (11) und den Wärmepumpen (4, 33),
- Einrichtungen zum Verwenden der Wettervorhersage für die kommenden Tage, um die günstigsten Perioden zu bestimmen, um der Außenluft durch die Wärmepumpe(n) Wärme zu entziehen,
- Einrichtungen zum Vorhersagen des erwarteten Energieabzugs/Energiegewinns aus jeder Belüftungseinheit entsprechend der Wettervorhersage und den vergangenen durchschnittlichen Verbrauchsraten auf Grundlage aufgezeichneter Daten für den Wärmeabzug/-gewinn jeder Belüftungseinheit mit der tatsächlichen Außentemperatur, den Benutzereinstellungen, der Tageszeit, des Wochentags und der Jahreszeit, und
- Einrichtungen zum Regeln der Vorrichtung entsprechend dem vorhergesagten Wärme-/Kühlbedarf und den günstigen Perioden zum Betreiben der Wärmepumpen (4, 33).

16. Vorrichtung nach Anspruch 15,
**dadurch gekennzeichnet, dass** die Einrichtungen zum Regeln der Vorrichtung entsprechend dem vorhergesagten Wärme-/Kühlbedarf und den günstigen Perioden zum Betreiben der Wärmepumpen in drei Betriebsarten arbeiten, wobei Betriebsart I eine neutrale Laufbedingung ist, bei der der Wärmebedarf ohne den Einsatz der Wärmepumpe(n) gedeckt werden kann, Betriebsart II die Heizbetriebsart und Betriebsart III die Kühlbetriebsart ist,
wobei Betriebsart I umfasst:
- Frischluft aus der Luftzufuhreinrichtung (14) durch Gebläse (25) zu den Belüftungseinheiten (1) zu leiten und dann die gebrauchte Belüftungsluft durch ein Gebläse (22) und einen Ableiter (26) durch Luftausleitungseinrichtungen (17) auszuleiten,
wobei Betriebsart II umfasst:
- eine normale Heizbetriebsart, bei der je nach der Außentemperatur Warmluft dem Wärmespeicher (11) zugeführt oder daraus geliefert wird, indem dieselben Einstellungen wie in Betriebsart I verwendet werden, mit der Ausnahme, dass der Ableiter (26) umgeschaltet wird, um Altluft durch eine Wärmepumpe (4) zu leiten, wobei Frischluft durch die Wärmeenergieaustauscheinrichtungen (5) aufgenommen, erwärmt und durch ein Gebläse (24) zu den Belüftungseinheiten (1) geleitet wird,
- eine erste Überschussheizbetriebsart, bei der die Wärmepumpe (4) mehr Wärme erzeugt, als von den Belüftungseinheiten (1) verbraucht wird, während der Wärmespeicher (11) voll ist oder mildes/warmes Wetter bevorsteht, die Wärmepumpe (4) dann abgeschaltet wird, an Luftzufuhreinrichtungen (14) eingelassene Außenluft durch Ableiter (30 und 31) durch den Wärmespeicher (11) abgeleitet und als warme Frischluft durch ein Gebläse (24) zu den Belüftungseinheiten (1) übertragen wird,
- eine zweite Überschussheizbetriebsart, bei der die Wärmepumpe (4) mehr Wärme erzeugt, als von den Belüftungseinheiten (1) verbraucht wird, während der Wärmespeicher (11) im Falle, dass kühles/kälteres Wetter bevorsteht, nicht voll ist, der Restbestand aus der Wärmepumpe (4) dann durch ein Zweiwegegebläse (23) zum Wärmespeicher (11) übertragen und über einen Ableiter (31) abgeleitet wird, um an einem Luftauslass (21) auszutreten,
- eine dritte Überschussheizbetriebsart, bei der das Wetter gegenwärtig mild/warm ist, aber kaltes Wetter bevorsteht, während der Wärmespeicher (11) nicht voll ist, dann eine Wärmepumpe (33) anläuft, die Außenluft durch eine Wärmeaustauscheinrichtung (34) mit voller Kapazität aufnimmt und den Wärmespeicher (11) mit der 2 - 3-fachen gewöhnlichen Strömungsrate durch das Zweiwegegebläse (23) auflädt, wobei Kaltluft an einer Luftausleitungseinrichtung (21) über eine Luftstromregeleinrichtung (31) austritt, während ein Gebläse (24) gleichzeitig nach Bedarf Warmluft an die Belüftungseinheiten (1) liefert, und
wobei Betriebsart III umfasst:
- eine normale Kühlbetriebsart im Falle von gegenwärtig warmem Wetter, dann tritt Warmluft durch eine Luftzufuhreinrichtung (15) und einen Ableiter (27) durch ein Gebläse (24) als warme Frischluft in die Belüftungseinheiten (1) ein, so dass Warmluft durch den Wärmespeicher (11) fließt und gekühlt wird und über Ableiter (31, 30) und ein Gebläse (25) als kühle Frischluft zu den Belüftungseinheiten (1) fließt,
- eine zweite Kühlbetriebsart im Falle von gegenwärtig kühlem/kalten Wetter, dann tritt kühle Frischluft an einer Luftzufuhreinrichtung (14) ein, fließt durch Ableiter (30, 31), um den Wärmespeicher (11) zu laden und als warme Frischluft durch das Zweiwegegebläse (23) auszutreten, und tritt über einen Ableiter (27) aus, und etwas von dieser Luft wird je nach dem Bedarf der Belüftungseinheiten (1) über das Gebläse (24) als frische Warmluft zu den Belüftungseinheiten (1) geleitet,
- eine dritte Kühlbetriebsart bei gegenwärtig und bevorstehend andauerndem warmem Wetter, und wobei die Gefahr besteht, dass der Wärmespeicher erschöpft wird, dann wird eine Wärmepumpe (33) eingeschaltet und warme Frischluft tritt durch die Wärmeenergieaustauscheinrichtung (34) ein, um in der Wärmepumpe (33) gekühlt zu werden, fließt dann durch einen Ableiter (29) zum Abkühlen sowohl zu einem Gebläse (25) als auch zu Belüftungseinheiten (1), und durch Ableiter (30, 31) zum Wärmespeicher (11) zum Laden, und tritt durch das Zweiwegegebläse (23) und einen Ableiter (27) als Warmluft aus.

17. Vorrichtung nach den Ansprüchen 15 - 16,
**dadurch gekennzeichnet, dass** die Vorrichtung dieselben Einrichtungen umfasst wie die in Anspruch 15 spezifizierte Vorrichtung, mit Ausnahme der Wärmepumpe (4), des Frischlufteinlasses (5), des linken Zweigs des Kanal (6) und des Ausleitungsauslasses (18).

18. Vorrichtung nach den Ansprüchen 15 - 16,
**dadurch gekennzeichnet, dass** die Vorrichtung dieselben Einrichtungen umfasst wie die in Anspruch 15 spezifizierte Vorrichtung, mit Ausnahme der Wärmepumpe (33), des Frischlufteinlasses (34), des rechten Zweigs des Kanals (6), des Zweiwegeströmungsteilers (28, 29), des Kanals (16) und des Ausleitungsauslasses (20).

## Revendications

1. Méthode pour une régulation de température et une ventilation efficaces énergétiquement pour une ou plusieurs unités de ventilation (1) de bâtiment(s) dans laquelle une ou plusieurs pompes à chaleur (4, 33) sont utilisées pour échanger de l'énergie thermique entre de l'air extérieur et un fluide caloporteur intérieur, dans laquelle le chauffage et/ou le refroidissement de chaque unité de ventilation (1) est réalisé en répartissant le fluide caloporteur intérieur dans chaque unité de ventilation (1),
**caractérisée en ce que**
- les variations naturelles à court terme de la température extérieure en raison des passages escomptés de systèmes météorologiques sur la base de prévisions météorologiques et les variations jour/nuit sont utilisées pour donner à la ou aux plusieurs pompes à chaleur (4, 33) des conditions optimisées de telle sorte que la ou les plusieurs pompes à chaleur (4, 33) soient uniquement mises en marche pour extraire la chaleur extérieure qui est délivrée vers le fluide de transfert et de distribution de chaleur intérieur au cours des périodes douces/chaudes relatives dans le cas du réchauffement du (des) bâtiment(s), ou uniquement au cours des périodes fraîches/froides relatives pour refroidir le fluide de transfert et de distribution de chaleur pour le retrait de la chaleur intérieure dans le cas du refroidissement du (des) bâtiment(s), et
- **en ce que** l'énergie thermique qui est échangée avec l'air extérieur, sur la base du microclimat du (des) bâtiment(s), du drain/gain énergétique par chaque unité de ventilation (1) et de la somme de ceci pour toutes les unités (1), et du degré de remplissage d'un stockage thermique (11), est partiellement utilisée pour couvrir la demande réelle des unités de ventilation (1) en chauffage ou refroidissement et la partie restante de l'énergie thermique est envoyée vers un accumulateur thermique pour couvrir la demande des unités de ventilation (1) en chauffage ou refroidissement pendant la (les) période(s) ultérieure(s) au cours desquelles les conditions météorologiques naturelles sont moins favorables pour échanger de l'énergie thermique depuis l'air extérieur par l'utilisation de pompes à chaleur (4, 33).

2. Méthode selon la revendication 1, **caractérisée en ce que** la demande en chauffage est également couverte en extrayant la chaleur de l'air utilisé existant dans la ou les plusieurs unités de ventilation (1).

3. Méthode selon la revendication 1 ou 2, **caractérisée en ce que** la prévision météorologique pour les 5/7 jours suivants est employée pour estimer la demande à venir en chauffage/refroidissement de la (des) unité(s) de ventilation (1) et **en ce que** cette estimation est employée avec le degré réel de remplissage de l'accumulateur thermique (11) pour déterminer quand et pendant combien de temps la (les) pompe(s) à chaleur (4, 33) devraient être engagées afin d'accumuler un stockage thermique optimal pour les 5/7 jours à venir.

4. Méthode selon les revendications 1 à 3, **caractérisée en ce que** le microclimat réel, tel que mesuré par le drain/gain de chaleur de chaque unité de ventilation (1), la température extérieure, les paramètres de l'utilisateur, le moment de la journée, le jour de la semaine et la saison, sont cumulés dans une base de données qui doit être utilisée pour estimer les 5/7 jours à venir de demande en chauffage ou refroidissement de la (des) unité(s) de ventilation (1).

5. Méthode selon l'une quelconque des revendications 1 à 4, **caractérisée en ce que** de l'air neuf est employé en tant que fluide de transfert et de distribution de chaleur pour chauffer ou refroidir la (les) unité(s) de ventilation (1) du (des) bâtiment(s), et **en ce que** la ventilation et la régulation thermique de chaque unité de ventilation (1) sont réalisées par aspiration de l'air usagé qui est remplacé par des quantités équilibrées d'air neuf froid et/ou chaud pour donner la température souhaitée de l'air neuf de remplacement.

6. Méthode selon l'une quelconque des revendications 1 à 5, **caractérisée en ce que**, afin d'obtenir une température stable et égale de l'agent de transfert et de distribution de chaleur sans tenir compte du degré de remplissage de l'accumulateur thermique (11),
- l'accumulateur thermique (11) comprend un ou plusieurs tubes allongés qui sont remplis d'une matière solide à grosses particules avec une distribution de taille étroite ou une conception particulière, et
- l'échange thermique est réalisé en envoyant le fluide de transfert et de distribution de chaleur à travers la matière solide à particules dans l'une ou l'autre direction de telle sorte que soit formée une zone froide (10) et une zone chaude (8) dans des extrémités opposées du tube qui présente une température froide et chaude, respectivement, sensiblement homogène.

7. Méthode selon la revendication 6, **caractérisée en ce que** le degré de remplissage de l'accumulateur thermique (11) est déterminé en mesurant la position de la zone de transition de température entre la zone froide (10) et la zone chaude (8) de l'accumulateur thermique (11).

8. Appareil pour une régulation de température et une ventilation efficaces énergétiquement d'une ou plusieurs unités de ventilation (1) de bâtiment(s), **caractérisé en ce que** l'appareil comprend :
- des moyens (2, 3, 22) destinés à extraire l'air usagé de chacune des unités de ventilation (1),
- des moyens destinés à remplacer l'air usagé extrait par des quantités équilibrées d'air neuf chaud (6, 7, 24) et froid (12, 13, 25) pour chacune des unités de ventilation (1),
- un accumulateur thermique (11) qui présente une zone chaude (8) et une zone froide (10) qui sont en communication avec les moyens destinés à fournir de l'air neuf chaud et froid, respectivement,
- une ou plusieurs pompes à chaleur (4, 33) qui présentent des moyens (5, 18) et (16, 29, 34) destinés à échanger l'énergie thermique avec l'air extérieur et des moyens destinés à transférer cette énergie thermique échangée vers une alimentation en air extérieur neuf qui est en communication avec les moyens destinés à fournir de l'air neuf chaud et froid et la zone chaude (8) et la zone froide (10) de l'accumulateur thermique (11),
- des moyens (26, 31) destinés à réguler les flux d'air de et vers la (les) unité(s) de ventilation (1) et l'accumulateur thermique, et des moyens destinés à mettre en marche ou éteindre la ou les plusieurs pompes à chaleur (4, 33),
- des moyens destinés à mesurer le degré de remplissage de l'accumulateur thermique (11),
- des moyens destinés à mesurer le drain/gain énergétique de chaque unité de ventilation (1), et
- des moyens destinés à réguler le fonctionnement de la (des) pompe(s) à chaleur (4, 33), les moyens destinés à mélanger l'air neuf froid et chaud et le flux d'air à travers chaque unité de ventilation (1) et l'accumulateur thermique (11), sur la base des variations escomptées de température extérieure sur la base des prévisions météorologiques, du degré de remplissage de l'accumulateur thermique (11), du microclimat du (des) bâtiments) et du drain énergétique de chaque unité de ventilation (1) et de la somme de tout ceci pour toutes les unités (11).

9. Appareil selon la revendication 8, **caractérisé en ce que** l'appareil comprend des moyens destinés à enregistrer et stocker le microclimat réel, tel que mesuré par un drain ou un gain de chaleur de chaque unité de ventilation, la température extérieure, les paramètres de l'utilisateur, le moment de la journée, le jour de la semaine et la saison et des moyens destinés à employer ces données pour estimer les 5/7 jours à venir de demande en chauffage ou refroidissement de la (des) unité(s) de ventilation (1).

10. Appareil selon la revendication 8, ou 9, **caractérisé en ce que** l'accumulateur thermique (11) comprend un ou plusieurs tubes allongés qui sont remplis de matière solide à grosses particules avec une distribution de taille étroite et quand l'échange thermique est réalisé en envoyant l'air neuf caloporteur à travers la matière solide à particules dans l'une ou l'autre direction de telle sorte que soit formée une zone froide et une zone chaude dans des extrémités opposées du tube qui présente une température froide et chaude, respectivement, sensiblement homogène.

11. Appareil selon la revendication 10, **caractérisé en ce que** le ou les plusieurs tubes allongés de l'accumulateur thermique (11) présentent un diamètre d'environ 1 à 1,5 m et une longueur de 3 à 20 m, de préférence de 5 à 10 m.

12. Appareil selon 1a revendication 11, **caractérisé en ce que** les diamètres de la matière à grosses particules de l'accumulateur thermique sont compris entre 20 et 60 mm.

13. Appareil selon la revendication 12, **caractérisé en ce que** la matière à grosses particules de l'accumulateur thermique (11) est du béton concassé dans une quantité totale de 0,5 à 2,0 m³ par m² de surface de plancher d'unité de ventilation qui doit être desservie.

14. Appareil selon la revendication 13, **caractérisé en ce que** la température de la zone froide de l'accumulateur thermique (11) est conservée dans la plage comprise entre 5 et 20 °C, de préférence entre 7,5 et 15 °C, et de manière préférée entre 8 et 12 °C et **en ce que** la zone chaude de l'accumulateur thermique est conservée dans la plage comprise entre 30 et 60 °C, de préférence entre 35 et 50 °C et de manière préférée entre 40 et 45 °C.

15. Appareil selon l'une quelconque des revendications 8 à 14 comprenant en outre :
- des moyens (14, 30) et (15, 27) destinés à fournir de l'air neuf extérieur directement dans les unités de ventilation (1) qui sont en communication avec les moyens destinés à alimenter respectivement en air neuf froid (12, 13, 25) et chaud (6, 7, 24) les unités de ventilation (1),
- des moyens destinés à purger l'air (17, 18, 19, 20, 21),
- des moyens (26, 27, 28, 29, 30, 31) destinés à réguler le flux d'air de et vers les entrées d'air neuf (14, 15), les sorties destinés à purger l'air (17, 18, 19, 20, 21), les unités de ventilation (1), l'accumulateur thermique (11) et les pompes à chaleur (4, 33),
- des moyens destinés à employer les prévisions météorologiques pour les prochains jours afin de déterminer les périodes les plus favorables pour extraire de l'énergie thermique à partir de l'air extérieur par la (les) pompe(s) à chaleur,
- des moyens pour prédire le drain/gain énergétique escompté de chaque unité de ventilation selon la prévision météorologique et les taux de consommation moyens historiques sur la base des données enregistrées pour le drain/gain de chaleur de chaque unité de ventilation avec la température extérieure réelle, les paramètres de l'utilisateur, le moment de la journée, le jour de la semaine et la saison, et
- des moyens destinés à réguler l'appareil selon la demande prévue de chauffage/refroidissement et les périodes favorables pour faire fonctionner les pompes à chaleur (4,33).

16. Appareil selon la revendication 15, **caractérisé en ce que** les moyens destinés à réguler l'appareil selon la demande prévue de chauffage/refroidissement et les périodes favorables pour faire fonctionner les pompes à chaleur fonctionnent en trois modes, dans lequel le mode I est un état de fonctionnement neutre dans lequel la demande en chauffage peut être couverte sans l'utilisation de pompe(s) à chaleur, le mode II est le mode de chauffage et le mode III est le mode de refroidissement,
dans lequel le mode I consiste à :
- faire passer de l'air extérieur depuis lesdits moyens d'alimentation en air (14) à travers un ventilateur (25) vers les unités de ventilation (1), puis évacuer l'air de ventilation usagé à travers les moyens de purge d'air (17) par un ventilateur (22) et un organe de dérivation (26),
dans lequel le mode II comprend :
- un mode de chauffage normal dans lequel de l'air tiède est fourni de ou vers l'accumulateur thermique (11) selon la température extérieure en utilisant les mêmes paramètres que le mode I sauf que l'organe de dérivation (26) est décalé pour faire passer l'air usagé à travers une pompe à chaleur (4), dans laquelle de l'air neuf est pris à travers des moyens d'échange thermique (5), chauffé et déplacé par un ventilateur (24) vers les unités de ventilation (1),
- un premier mode de chauffage excédentaire dans lequel la pompe à chaleur (4) produit plus de chaleur que n'en consomment les unités de ventilation (1) alors que l'accumulateur thermique (11) est plein ou alors qu'un temps doux/chaud est prévu, puis la pompe à chaleur (4) est éteinte, de l'air extérieur est admis au niveau des moyens d'alimentation en air (14), dérivé à travers l'accumulateur thermique (11) par les organes de dérivation (30 et 31) et transféré en tant qu'air neuf chaud par un ventilateur (24) vers les unités de ventilation (1),
- un deuxième mode de chauffage excédentaire dans lequel la pompe à chaleur (4) produit plus de chaleur que n'en consomment les unités de ventilation (1) quand l'accumulateur thermique (11) n'est pas plein dans le cas où un temps frais/plus froid serait escompté, puis le reste de la pompe à chaleur (4) est transféré vers l'accumulateur thermique (11) grâce à un ventilateur à deux voies (23) et dérivé vers une sortie au niveau d'une sortie d'air (21) par l'intermédiaire d'un organe de dérivation (31),
- un troisième mode de chauffage excédentaire dans lequel le temps est actuellement doux/chaud mais un temps froid est attendu alors que l'accumulateur thermique (11) n'est pas plein, puis une pompe à chaleur (33) est démarrée, prenant de l'air extérieur à travers des moyens d'échange thermique (34) à pleine capacité et chargeant l'accumulateur thermique (11) à 2/3 fois le débit ordinaire à travers le ventilateur à deux voies (23) avec la sortie d'air froid au niveau de moyens de purge d'air (21) par l'intermédiaire de moyens de régularisation de flux d'air (31), alors qu'un ventilateur (24) délivre simultanément de l'air chaud vers les unités de ventilation (1) comme demandé, et
dans lequel le mode III comprend :
- un mode normal de refroidissement dans le cas d'un temps actuellement chaud, puis l'air chaud pénètre les moyens d'alimentation en air (15) et un organe de dérivation (27) à travers un ventilateur (24) en tant qu'air neuf et chaud vers les unités de ventilation (1), de telle sorte que l'air chaud passe à travers l'accumulateur thermique (11) et se refroidisse et passe à travers des organes de dérivation (31, 30) et un ventilateur (25) en tant qu'air neuf frais vers les unités de ventilation (1),
- un deuxième mode de refroidissement dans les cas d'un temps actuellement chaud, puis l'air neuf froid entre au niveau des moyens d'alimentation en air (14), passe à travers des organes de dérivation (30, 31) pour charger l'accumulateur thermique (11) et se refroidit et sort en tant qu'air neuf chaud à travers ledit ventilateur à deux voies (23) et sort par l'intermédiaire d'un organe de dérivation (27) et un peu de cet air est conduit à travers le ventilateur (24) vers les unités de ventilation (1), en tant qu'air neuf chaud, selon la demande émanant des unités de ventilation (1),
- un troisième mode de refroidissement quand un temps actuellement chaud et prévu pour durer, et avec l'accumulateur thermique en risque d'être épuisé, puis une pompe à chaleur (33) est mise en marche et l'air neuf chaud entre à travers des moyens d'échange thermique (34) pour être refroidi dans ladite pompe à chaleur (33), puis passant à travers un organe de dérivation (29) à la fois vers un ventilateur (25) et des unités de ventilation (1) pour un refroidissement, et à travers des organes de dérivation (30, 31) vers l'accumulateur thermique (11) pour la charge, puis sort en tant qu'air chaud à travers ledit ventilateur à deux voies (23) et un organe de dérivation (27).

17. Appareil selon les revendications 15 et 16, **caractérisé en ce que** l'appareil comprend les mêmes moyens que l'appareil spécifié dans la revendication 15 sauf la pompe à chaleur (4), l'entrée d'air neuf (5), la gaine de dérivation gauche (6) et l'orifice de sortie de purge (18).

18. Appareil selon les revendications 15 et 16, **caractérisé en ce que** l'appareil comprend les mêmes moyens que l'appareil spécifié dans la revendication 15 sauf la pompe à chaleur (33), l'entrée d'air neuf (34), la gaine de dérivation droite (6), l'organe de dérivation de flux à deux voies (28, 29), la conduite (16) et l'orifice de sortie de purge (20).
